# EUROPEAN PATENT APPLICATION

(11) **EP 2 211 033 A1**
(43) Date of publication of application: **28.07.2010**
(21) Application number: 08846966.3
(22) Date of filing: 05.11.2008
(51) Int. Cl.: F01N 3/08, B01D 53/94, B60K 6/46, B60L 11/12, B60W 10/06, B60W 20/00, F01N 3/24, F02D 17/00, F02D 21/08, F02D 29/06, F02D 41/04, F02D 45/00, F02M 25/07

(54) **EXHAUST PURIFICATION DEVICE FOR HYBRID ELECTRIC AUTOMOBILE**

(30) Priority: 09.11.2007 JP 2007291666
(71) Applicant: Mitsubishi Fuso Truck and Bus Corporation, Kanagawa 212-0058 (JP)
(72) Inventor: HIRANUMA, Satoshi, Kawasaki-shi Kanagawa 212-0058 (JP); MURATA, Minehiro, Kawasaki-shi Kanagawa 212-0058 (JP); TAKEDA, Yoshinaka, Kawasaki-shi Kanagawa 212-0058 (JP); FUJITA, Hiroaki, Kawasaki-shi Kanagawa 212-0058 (JP)
(74) Representative: advotec.
(86) International application number: PCT/JP2008/070128
(87) International publication number: WO 2009/060866

(57) **Abstract**

An ammonia selective reduction-type NOx catalyst (48) is interposed in an exhaust passage of an engine (2) installed in a series-type hybrid electric vehicle (1), and a urea-water injector (62) for supplying urea water in the upstream side of the ammonia selective reduction-type NOx catalyst (48) is placed in the exhaust passage. The engine (2) started in response to a storage state of a battery (8) is operated in a first operation mode, and urea water supply is suspended, until exhaust temperature reaches predetermined temperature (Ta). Once the exhaust temperature reaches the predetermined temperature (Ta), the engine (2) is operated in a second operation mode, and urea water is supplied from the urea-water injector (62). While the engine (2) is operated in the first operation mode, NOx emissions from the engine (2) are more decreased than in the second operation mode.

## Description

### Technical Field

The present invention relates to an exhaust purification system for an engine used in a hybrid electric vehicle, and more specifically, to an exhaust purification system for a series-type hybrid electric vehicle, in which a generator is driven by using power from an engine that is not used for moving the vehicle; the electric power generated by the generator is stored in a battery; and an electric motor that is driven by the electric power supplied from the battery is used as a power source for moving the vehicle.

### Background Art

A hybrid electric vehicle or a so-called series-type hybrid electric vehicle has been developed and put to practical use, in which a generator is driven by using power from an engine that is not used for moving the vehicle; electric power generated by the generator is stored in a battery; and an electric motor that is driven by the electric power supplied from the battery is used as a power source for moving the vehicle.

If the storage rate of the battery has become low in the series-type hybrid electric vehicle, the engine is started to operate, and the battery is charged with the generated power of the generator that is driven by the engine. When the storage rate of the battery is recovered up to a predetermined storage rate by the generated power of the generator, the engine is stopped.

In the series-type hybrid electric vehicle, it is possible to operate the engine in an operating range where exhaust gas contains a relatively small amount of pollutants, as compared with the case where an engine is used as one of power sources for moving a vehicle. On the other hand, pollutants are still contained in the exhaust gas, so that an exhaust purification system for purifying exhaust gas is utilized in the series-type hybrid electric vehicle. Unexamined Japanese Patent Publication No. 2005-248875 (hereinafter, referred to as Patent Document 1) suggests an exhaust purification system for a hybrid electric vehicle, which successfully purifies exhaust gas while maintaining at a proper temperature a catalyst provided in the exhaust purification system.

The exhaust gas of an engine contains NOx (nitrogen oxide) that is one of the pollutants. In order to reduce the NOx to purify the exhaust gas, another exhaust purification system, which has been also well known, includes an ammonia selective reduction-type NOx catalyst that is disposed in the exhaust passage of an engine. This ammonia selective reduction-type NOx catalyst can be considered to be used also in an exhaust purification system for a hybrid electric vehicle.

If the ammonia selective reduction-type NOx catalyst is used for an exhaust purification system, ammonia is supplied to the ammonia selective reduction-type catalyst as a reducing agent, and it is common to supply exhaust gas with urea water that is easier to handle than ammonia. In this case, the urea water is injected into the exhaust gas by using a urea-water injector or another device. The urea contained in the atomized urea water supplied from the urea-water injector into the exhaust gas is hydrolyzed by exhaust heat, producing ammonia. The produced ammonia is supplied to the ammonia selective reduction-type NOx catalyst and temporarily adsorbed by the ammonia selective reduction-type NOx catalyst. When denitration reaction between the ammonia and the NOx in the exhaust gas is promoted by the NOx catalyst, the NOx is reduced, and the exhaust gas is purified.

In the exhaust purification system having such ammonia selective reduction-type NOx catalyst, the ammonia selective reduction-type NOx catalyst and the urea-water injector have low temperatures right after the engine is started, so that the urea contained in the injected urea water cannot be well hydrolyzed within the exhaust gas. It is then necessary to suspend the injection of the urea water from the urea-water injector until exhaust temperature is increased to a certain temperature after the start of the engine.

However, if the urea water supply is suspended after the start of the engine until the temperatures of the ammonia selective reduction-type NOx catalyst and the urea-water injector are increased, the selective reduction of NOx in the ammonia selective reduction-type NOx catalyst using, as a reducing agent, the ammonia produced from the urea water is halted as long as the urea water supply is suspended, and it causes a problem that the exhaust gas cannot be purified.

Especially in the case of the series-type hybrid electric vehicle, engine start and stop are repeated depending on the storage state of the battery as mentioned above. In consequence, every time the engine is started, the vehicle falls into a state where exhaust gas cannot be purified by selective reduction of NOx. This drastically deteriorates the exhaust purification efficiency of the ammonia selective reduction-type NOx catalyst, and causes more serious problems.

### Disclosure of the Invention

The present invention has been made in light of the foregoing issue. An object of the present invention is to provide an exhaust purification system for a hybrid electric vehicle, which is capable of reducing the amount of NOx that is emitted into the atmosphere by an engine of a series-type hybrid electric vehicle.

In order to achieve the object, the exhaust purification system for a hybrid electric vehicle according to the present invention, in which a generator is driven by power from an engine that is not used for moving the vehicle, electric power generated by the generator is stored in a battery, and an electric motor that is driven by the electric power supplied from the battery is used as a power source for moving the vehicle, comprises: an ammonia selective reduction-type NOx catalyst interposed in an exhaust passage of the engine, for selectively reducing NOx contained in exhaust gas by using ammonia as a reducing agent; a urea water supply unit for supplying urea water into the exhaust gas existing upstream of the ammonia selective reduction-type NOx catalyst; and a control unit for starting or stopping the engine according to a storage state of the battery, and controlling the urea water supply unit to start the urea water supply when a preset supply condition is met after the engine is started, the control unit operating the engine in a first operation mode before the start of the urea water supply from the urea water supply unit, and operating the engine in a second operation mode after the start of the urea water supply from the urea water supply unit, wherein the control unit changes an operation state of the engine between the first operation mode and the second operation mode so that NOx emissions from the engine are more decreased in the first operation mode than in the second operation mode.

A hybrid electric vehicle equipped with the exhaust purification system thus configured uses engine power not for moving the vehicle but for driving the generator. The engine is operated or stopped by the control unit depending on a storage state of the battery that supplies electric power to the electric motor functioning as a power source for moving the vehicle.

After the start of the engine, the control unit of the exhaust purification system of the above-described hybrid electric vehicle suspends the urea water supply from the urea water supply unit and operates the engine in the first operation mode until a preset supply condition is met. Once the supply condition is met, the control unit operates the engine in the second operation mode, and controls the urea water supply unit to start the urea water supply. In result, the urea water is supplied from the urea water supply unit into the exhaust gas existing upstream of the ammonia selective reduction-type NOx catalyst. Urea contained in the urea water supplied from the urea water supply unit into the exhaust gas is hydrolyzed by the heat of the exhaust gas discharged from the engine. Ammonia produced by the hydrolyzation is supplied to the ammonia selective reduction-type NOx catalyst. The supplied ammonia is temporarily adsorbed by the ammonia selective reduction-type NOx catalyst. When denitration reaction between the ammonia and the NOx in the exhaust gas is promoted by the NOx catalyst, the NOx is reduced, thereby purifying the exhaust gas.

The control unit switches the operation state of the engine between the first and second operation modes so that, when the engine is in operation in the first operation mode before the start of the urea water supply from the urea water supply unit, NOx emissions from the engine are more decreased than in a case where the engine is in operation in the second operation mode after the start of the urea water supply from the urea water supply unit.

Consequently, even if the urea water is not supplied from the urea water supply unit, and it is difficult to carry out the selective reduction of NOx by using the ammonia selective reduction-type NOx catalyst, the amount of NOx emissions into the atmosphere can be successfully reduced.

There are various methods of changing the operation state of the engine between the first and second operation modes. For example, the control unit may change the operation state of the engine between the first and second operation modes by making an EGR rate of the engine in the first operation mode higher than an EGR rate of the engine in the second operation mode.

In this situation, before the urea water supply from the urea water supply unit is started, NOx emissions from the engine are decreased by operating the engine with a relatively high EGR rate. The amount of NOx emissions into the atmosphere is therefore surely reduced without urea water supply. After the urea water supply from the urea water supply unit is started, the engine is operated with a relatively low EGR rate, so that the amount of NOx emissions from the engine is increased more than before the start of the urea water supply. However, the amount of NOx emissions into the atmosphere is maintained small since NOx is selectively reduced by the ammonia selective reduction-type NOx catalyst using, as a reducing agent, the ammonia produced from the urea water supplied into the exhaust gas. Furthermore, the engine is operated with a relatively low EGR rate, so that the engine is shifted to an operation state that is highly efficient as compared to before the start of the urea water supply. This provides good fuel consumption.

When the EGR rate is changed between the first and second operation modes as stated above, the control unit may change the operation state of the engine between the first and second operation modes not only by changing the EGR rate of the engine but also by delaying fuel-injection timing of the engine in the first operation mode later than fuel-injection timing of the engine in the second operation mode.

In this case, before the start of the urea water supply from the urea water supply unit, NOx emissions from the engine are more decreased because the engine is operated with a relatively high EGR rate and with fuel-injection timing delayed to a relatively large degree. The amount of NOx emissions into the atmosphere is therefore more surely reduced without urea water supply. After the start of the urea water supply from the urea water supply unit, since the engine is operated with a relatively low EGR rate and with fuel-injection timing that is more advanced than before the start of the urea water supply, the amount of NOx emissions from the engine is increased more than before the start of the urea water supply. However, the amount of NOx emissions into the atmosphere is maintained small since NOx is selectively reduced by the ammonia selective reduction-type NOx catalyst using, as a reducing agent, the ammonia produced from the urea water supplied into the exhaust gas. Furthermore, at this time, the engine is operated with the relatively low EGR rate and with the fuel-injection timing more advanced than before the start of the urea water supply, so that the engine is shifted to an operation state that is highly efficient as compared to before the start of the urea water supply. As a result, a good fuel consumption of the engine is achieved.

The control unit may change the operation state of the engine between the first and second operation modes not by changing the EGR rate as mentioned but by, for example, delaying the fuel-injection timing of the engine in the first operation mode later than the fuel-injection timing of the engine in the second operation mode.

In this case, before the start of the urea water supply from the urea water supply unit, NOx emissions from the engine are deceased by operating the engine with relatively greatly delayed fuel-injection timing. The amount of NOx emissions into the atmosphere is therefore reliably reduced without urea water supply. After the start of the urea water supply from the urea water supply unit, the amount of NOx emissions from the engine is increased more than before the start of the urea water supply by operating the engine with the fuel-injection timing more advanced than before the start of the urea water supply. However, the amount of NOx emissions into the atmosphere is maintained small since NOx is selectively reduced by the ammonia selective reduction-type NOx catalyst using, as a reducing agent, the ammonia produced from the urea water supplied into the exhaust gas. Furthermore, at this time, the engine is operated with the fuel-injection timing more advanced than before the start of the urea water supply, so that the engine is shifted to an operation state that is highly efficient as compared to before the urea water supply. Consequently, a good fuel consumption of the engine is achieved.

### Brief Description of the Drawings

FIG. 1 is a view showing the entire configuration of a hybrid electric vehicle equipped with an exhaust purification system according to one embodiment of the present invention;
FIG. 2 is a view showing a system configuration of an engine installed in the hybrid electric vehicle of FIG. 1;
FIG. 3 is a flowchart showing a charging control implemented by an HEV-ECU; and
FIG. 4 is a time chart showing temporal changes in operation state of the engine, EGR rate of the engine, delay amount of fuel-injection timing, urea-water supply state, exhaust temperature, and NOx concentration in exhaust gas emitted from an exhaust aftertreatment device, during the charging control shown in FIG. 3.

### Best Mode of Carrying out the Invention

An embodiment of the present invention will be described below with reference to the attached drawings.

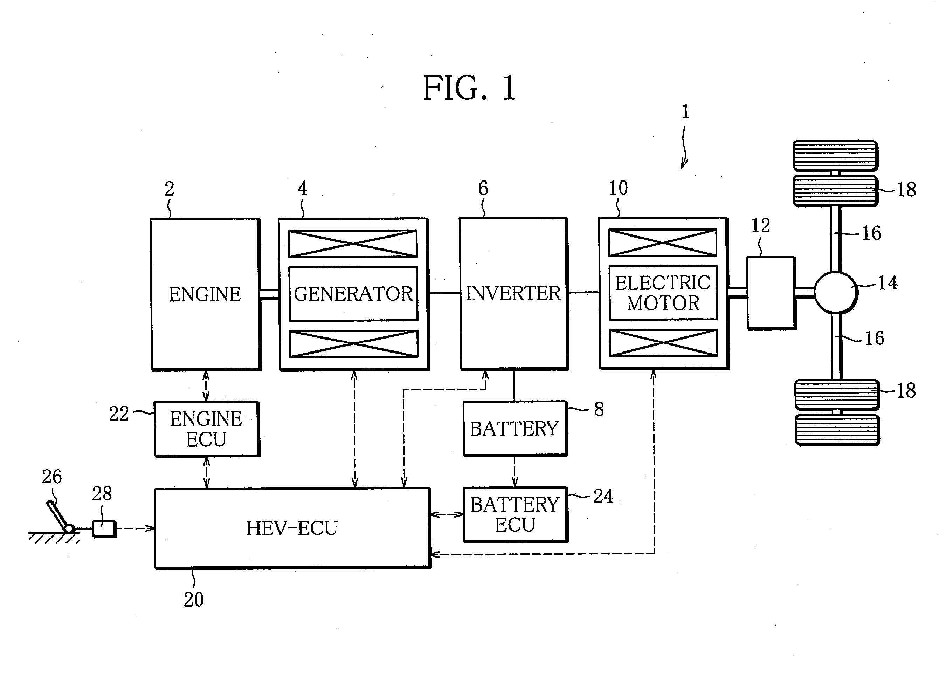

FIG. 1 shows the entire configuration of a series-type hybrid electric vehicle 1 equipped with an exhaust purification system according to one embodiment of the present invention.

An output shaft of a 4-cylinder diesel engine (hereinafter, referred to as engine) 2 is connected to a rotary shaft of a generator 4. The output of the engine 2 is used not for moving the vehicle 1 but for driving the generator 4. The generated power of the generator 4 driven by the engine 2 is stored in a battery 8 via an inverter 6. The inverter 6 adjusts the generated power of the generator 4 by controlling current flowing between the generator 4 and the battery 8 so that the battery 8 is properly charged with the power supplied from the generator 4. The generator 4 is also capable of acting as an electric motor in response to being supplied with electric power from the battery 8 through the inverter 6 when the engine 2 is stationary, and of thus cranking the engine 2.

The hybrid electric vehicle 1 is equipped with an electric motor 10 serving as a power source for moving the vehicle 1. The electric motor 10 has an output shaft that is connected to right and left driving wheels 18 through a reduction gear unit 12, a differential gear unit 14 and a pair of drive shafts 16. The electric motor 10 is supplied with the electric power of the battery 8 through the inverter 6. In other words, the inverter 6 adjusts the electric power supplied to the electric motor 10 and thereby driving force transmitted from the electric motor 10 to the driving wheels 18 can be adjusted.

When the vehicle is braked, the electric motor 10 acts as a generator. When this happens, a kinetic energy of the vehicle is transmitted to the electric motor 10 through the driving wheels 18, and the electric motor 10 converts the kinetic energy into AC power, thereby generating a regenerative braking torque. The AC power is converted into DC power by the inverter 6 and the battery 8 is charged with the converted DC power. That is, the kinetic energy of the vehicle is recovered as electric energy at the time of braking.

An HEV-ECU (control unit) 20 collects information of respective operation states of the engine 2, the generator 4, the inverter 6, the electric motor 10, and the vehicle, and information from an engine ECU (control unit) 22 for controlling the engine 2, a battery ECU 24 for monitoring the battery 8, etc. Based upon the information collected, the HEV-ECU 20 carries out comprehensive control while sending commands to the engine ECU 22 and the battery ECU 24 so that the engine 2, the generator 4, the inverter 6 and the electric motor 10 operate properly.

More specifically, an accelerator position sensor 28 for detecting a depression amount of an accelerator pedal 26 is electrically connected to the HEV-ECU 20. The HEV-ECU 20 controls the inverter 6 according to the depression amount of the accelerator pedal 26, which is detected by the accelerator position sensor 28, and thus adjusts the driving force transmitted from the electric motor 10 to the driving wheels 18 according to the driver's demands. The HEV-ECU 20 controls the inverter 6 at the time of braking of the vehicle and adjusts the electric power that is supplied from the electric motor 10 acting as a generator to the battery 8, to thereby control the regenerative braking force generated by the electric motor 10. When the battery 8 needs to be charged, the HEV-ECU 20 sends a command to the engine ECU 22 to start the engine 2 and drive the generator 4 with the engine 2. At the same time, the HEV-ECU 20 controls the inverter 6 so that the battery 8 is properly charged by causing the generator 4 to produce designated electric power.

The engine ECU 22 is installed for the purpose of carrying out general operation control of the engine 2. According to the command from the HEV-ECU 20, the engine ECU 22 carries out the operation control of the engine 2 to drive the generator 4 to obtain from the generator 4 the electric power required for charging the battery 8. In the operation control of the engine 2, the engine ECU 22 adjusts the fuel-injection amount and timing of the engine 2 and transmits to the HEV-ECU 20 the various kinds of information obtained from the engine 2.

The battery ECU 24 detects the temperature and voltage of the battery 8, the current flowing between the inverter 6 and the battery 8, and the like. The battery ECU 24 determines a storage rate SOC of the battery 8 on the basis of these detected results, and transmits the storage rate SOC to the HEV-ECU 20 together with the detected results.

In the hybrid electric vehicle 1 thus configured, when the driver presses the accelerator pedal 26, the HEV-ECU 20 determines a driving torque to be transmitted to the driving wheels 18 on the basis of the depression amount of the accelerator pedal 26, which is detected by the accelerator position sensor 28, and vehicle running speed that is detected by a running speed sensor (not shown). The HEV-ECU 20 controls the inverter 6 so that the electric motor 10 generates the determined driving torque. In result, the electric power of the battery 8 is supplied to the electric motor 10 through the inverter 6. The driving torque generated by the electric motor 10 in this manner is transmitted through the reduction gear unit 12, the differential gear unit 14 and the drive shafts 16 to the right and left driving wheels 18, thereby moving the vehicle.

The power supply to the electric motor 10 gradually reduces the storage rate of the battery 8. In order to prevent over-discharge of the battery 8, the HEV-ECU 20 commands the engine ECU 22 to operate the engine 2 and drive the generator 4 according to the storage rate SOC of the battery 8, which is transmitted from the battery ECU 24.

The engine ECU 22 implements the operation control of the engine 2 according to the command from the HEV-ECU 20. To be specific, when the battery 8 needs to be charged due to a decrease of the storage rate, the engine ECU 22 starts the engine 2 and makes the engine 2 drive the generator 4. In this situation, the HEV-ECU 20 controls the inverter 6 so that designated target electric power is produced by the generator 4 at designated target revolution speed. Along with this, the engine ECU 22 controls the engine 2 so that the revolution speed of the engine 2 becomes equal to the target revolution speed. The target revolution speed and the target power are determined so that the battery 8 can be efficiently charged and that the speed and load of the engine 2 fall in a preset operating range. The preset operating range is, for example, an operating range in which NOx concentration in exhaust gas is minimized, an operating range in which the operation efficiency of the engine 2 is relatively high, etc. Such an operating range is determined, for example, by the specifications of the hybrid electric vehicle 1, the specifications of the engine 2, etc.

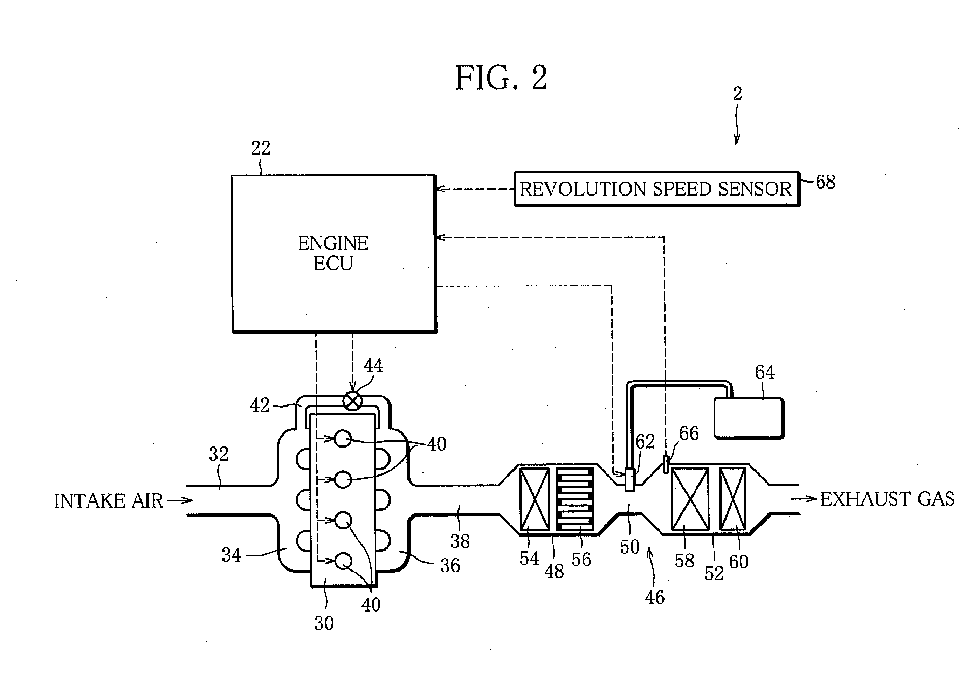

When the engine 2 is in operation, the exhaust gas of the engine 2 has to be purified before being emitted into the atmosphere because the exhaust gas of the engine 2 contains atmospheric pollutants, such as NOx and particulates. A configuration for purifying the exhaust gas in the engine 2 will be described below in detail with reference to FIG. 2 showing a system configuration of the engine 2.

As illustrated in FIG. 2, the engine 2 has an engine body 30 that combusts fuel in each cylinder and thereby produces a driving force for driving the generator 4. The cylinders of the engine body 30 are connected with an intake manifold 34 that introduces air for fuel combustion from an intake pipe 32 and supplies the air to the cylinders of the engine body 30. Connected to the cylinders of the engine body 30 is an exhaust manifold 36 for discharging the exhaust gas resulted from fuel combustion. Passages of the exhaust manifold 36 converge together to be connected to an exhaust pipe (exhaust passage) 38.

The cylinders of the engine body 30 are provided with injectors 40 for injecting fuel into the respective cylinders. High-pressure fuel is supplied from a fuel-injection pump (not shown) to the injectors 40. An EGR passage 42 for recirculating to the intake side a portion of the exhaust gas discharged from the engine body 30 is connected between the intake manifold 34 and the exhaust manifold 36. An EGR valve 44 is interposed in the EGR passage 42. By controlling the opening degree of the EGR valve 44, the amount of the exhaust gas recirculated to the intake side is changed, and an EGR rate is thus adjusted.

Interposed in the exhaust pipe 38 is an exhaust aftertreatment device 46 for purifying the exhaust gas discharged from the engine body 30 and emitting the purified exhaust gas into the atmosphere. The exhaust aftertreatment device 46 is made up of an upstream casing 48 and a downstream casing 52 that is connected to the downstream side of the upstream casing 48 through a communicating passage 50. A pre-oxidation catalyst 54 is contained in the upstream casing 48. A particulate filter (hereinafter, referred to as filter) 56 is contained in the upstream casing 48 to be located in the downstream side of the pre-stage oxidation catalyst 54.

The filter 56 traps and collects particulates contained in the exhaust gas, thereby purifying the exhaust gas discharged from the engine body 30. The pre-stage oxidation catalyst 54 oxidizes NO (nitrogen monoxide) contained in the exhaust gas and thus produces NO₂ (nitrogen dioxide). Since the pre-stage oxidation catalyst 54 and the filter 56 are arranged as described, the particulates collected by and accumulated in the filter 56 are oxidized by reaction with the NO₂ supplied from the pre-stage oxidation catalyst 54.
As a result, the particulates are removed from the filter 56, and a continuous regeneration of the filter 56 is carried out.

The downstream casing 52 contains an ammonia selective reduction-type NOx catalyst (hereinafter, referred to as an SCR catalyst) 58 that selectively reduces NOx (nitrogen oxide) in the exhaust gas by using ammonia as a reducing agent and thus purifies the exhaust gas. In the downstream side of the SCR catalyst 58 in the downstream casing 52, there is placed a post-stage oxidation catalyst 60 for removing ammonia that escapes from the SCR catalyst 58. The post-stage oxidation catalyst 60 also has a function of oxidizing CO (carbon monoxide) produced in the process of burning the particulates during an after-mentioned forced regeneration of the filter 56, and emitting CO₂ (carbon dioxide), which is produced by oxidizing the CO, into the atmosphere.

Interposed in the communicating passage 50 is a urea-water injector (urea-water supply unit) 62 that injects and supplies urea water into the exhaust gas existing in the communicating passage 50. The urea-water injector 62 is supplied with urea water stored in a urea-water tank 64 through a urea-water supply pump (not shown). The urea water supplied to the urea-water injector 62 is injected from the urea-water injector 62 into the exhaust gas existing in the communicating passage 50 by opening/closing the urea-water injector 62.

Urea that is contained in the atomized urea water injected from the urea-water injector 62 is hydrolyzed by exhaust heat to produce ammonia. The produced ammonia is supplied to the SCR catalyst 58. The supplied ammonia is temporarily adsorbed by the SCR catalyst 58. The SCR catalyst 58 promotes a denitration reaction between the adsorbed ammonia and the NOx in the exhaust gas. The NOx is then turned into harmless N₂. If the ammonia escapes from the SCR catalyst 58 without reacting with the NOx, the ammonia is removed by the post-stage oxidation catalyst 60.

An exhaust temperature sensor 66 for detecting exhaust temperature is placed in the upstream side of the SCR catalyst 58 in the downstream casing 52. The exhaust temperature sensor 66 detects the temperature of the exhaust gas flowing into the SCR catalyst 58.

The engine ECU 22 is formed of a CPU, memory chips, timer counters, and the like, to control the engine body 30 and the urea-water injector 62 in response to commands from the HEV-ECU 20. The engine ECU 22 calculates various control amounts, such as the amount of fuel supply to the cylinders from the injectors 40 of the engine body 30, the opening degree of the EGR valve 44, and the amount of urea water supply from the urea-water injector 62, on the basis of information transmitted from various sensors (not shown), such as a revolution speed sensor 68 provided to the engine body 30 for detecting the revolution speed of the engine body 30. According to the control amounts obtained, the engine ECU 22 also controls various devices.

The engine 2 thus configured is started by the engine ECU 22 when the storage rate of the battery 8 is reduced by power supply to the electric motor 10, and the HEV-ECU 20 determines on the basis of the storage rate SOC of the battery 8, which is detected by the battery ECU 24, that the battery 8 needs to be charged. After being started, the engine 2 is controlled by the engine ECU 22 so that the battery 8 is properly charged with the generated electric power of the generator 4 according to a command from the HEV-ECU 20.

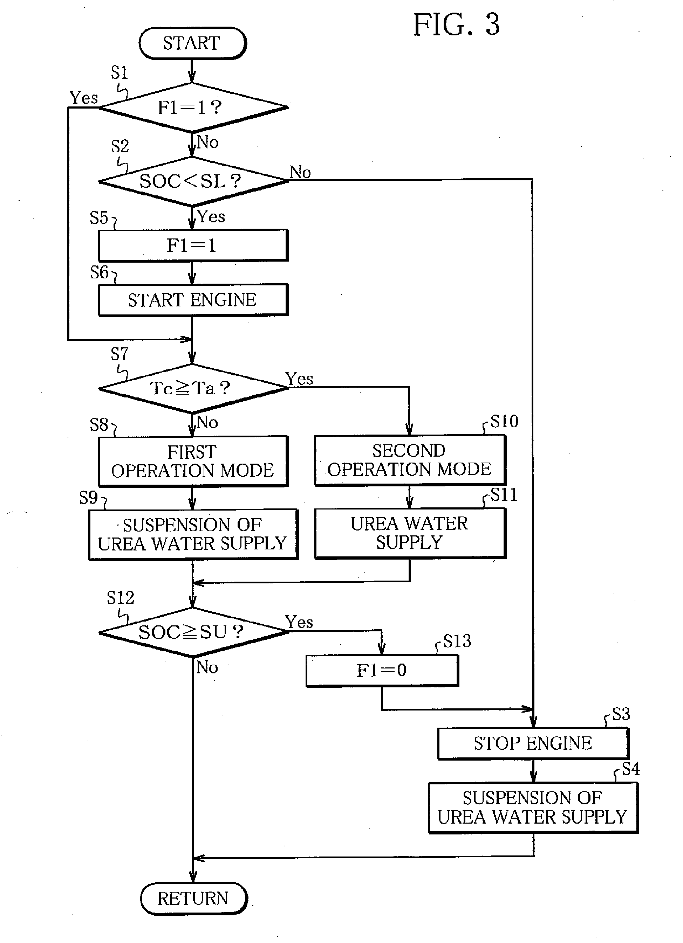

In order to properly drive the generator 4 by means of the engine 2. and to maintain the storage rate of the battery 8 within a proper range by charging the battery 8 with the generated electric power of the generator 4, the HEV-ECU 20 repeatedly carries out charging control at predetermined control intervals, as shown in the flowchart of FIG. 3. The charging control is started when a starting switch (not shown), which is located in the compartment of the hybrid electric vehicle 1, is operated to an ON-position, and is terminated when the starting switch is operated to an OFF-position.

Once the charging control is started by operating the starting switch to the ON-Position, the HEV-ECU 20 first makes a determination in Step S1 as to whether a value of a flag F1 is "1". The flag F1 indicates whether the battery 8 needs to be charged. The flag F1 with a value of "0" indicates that the charging of the battery 8 is not necessary, whereas the flag F1 with a value of "1" indicates the need for charging of the battery 8.

An initial value of a flag F2 is "0" at the starting of the charging control, so that the HEV-ECU 20 advances the procedure to Step S2 according to the judgment of Step S1.
In Step S2, the HEV-ECU 20 makes a determination as to whether the storage rate SOC of the battery 8, which is detected by the battery ECU 24, is less than a predetermined lower limit storage rate SL.

The lower limit storage rate SL is a judgment value for judging the necessity of charging of the battery 8. If the storage rate SOC of the battery 8 is not less than the lower limit storage rate SL, the HEV-ECU 20 determines that the storage rate SOC of the battery 8 is not so low that the battery 8 needs to be charged. The HEV-ECU 20 then advances the procedure to Step S3. In Step S3, the HEV-ECU 20 commands the engine ECU 22 to stop the engine 2, and controls the inverter 6 to conduct no electric power generation using the generator 4. Since the engine 2 is already stationary, the engine ECU 22 maintains the engine 2 in the stationary condition according to the command of the HEV-ECU 20.

In Step S4, the HEV-ECU 20 commands the engine ECU 22 to suspend the urea water supply, and then ends the control procedure for the present control cycle. Since the urea water supply from the urea-water injector 62 is not yet started, the engine ECU 22 continues the suspension of the urea water supply according to the command of the HEV-ECU 20.

In the subsequent control cycle, the HEV-ECU 20 starts the procedure from Step S1 again. Since the value of the flag F1 is still at "0", the HEV-ECU 20 advances the procedure from Step S1 to Step S2, and again, determines whether the storage rate SOC of the battery 8 is less than the predetermined lower limit storage rate SL. This means that unless the storage rate SOC of the battery 8 falls below the lower limit storage rate SL, the HEV-ECU 20 repeats the procedure from Steps S1 to S4. As a consequence, the engine 2 is maintained in the stationary condition, and the generator 4 does not generate electric power. The urea water supply from the urea-water injector 62 is also kept suspended.

When the storage rate SOC of the battery 8 falls below the lower limit storage rate SL along with the discharging of the battery 8, the HEV-ECU 20 advances the procedure from Step S2 to Step S5. Since the HEV-ECU 20 determines in Step S2 that the battery 8 needs to be charged, the HEV-ECU 20 sets the value of the flag F1 at "1" in Step S5, and starts the engine 2 in Step S6.

In Step S6, the HEV-ECU 20 commands the engine ECU 22 to start the engine 2, and controls the inverter 6 so that the generator 4 operates as an electric motor. In cooperation with this, the engine ECU 22 begins fuel supply to the engine 2 to start the engine 2 in response to the command of the HEV-ECU 20. In this manner, the generator 4 operates as an electric motor and cranks the engine 2, and the engine ECU 22 begins the fuel supply to the engine 2e, to thereby start the engine 2.

When the starting of the engine 2 is completed, the engine ECU 22 informs the HEV-ECU 20 of the completion of the starting of the engine 2. Upon receipt of this information, the HEV-ECU 20 transmits a control signal to the inverter 6 to finish the motor operation of the generator 4, and then advances the procedure from Step S6 to Step S7.

In Step S7, on the basis of the information transmitted from the engine ECU 22, the HEV-ECU 20 makes a determination as to whether exhaust temperature Tc of the exhaust gas flowing into the SCR catalyst 58, which is detected by the exhaust temperature 66, is equal to or higher than predetermined temperature Ta. The predetermined temperature Ta is set, for example, at 200 degrees centigrade on the basis of lower limit temperature at which the urea contained in the urea water injected from the urea-water injector 62 into exhaust gas can be hydrolyzed and transformed into ammonia without difficulty. If the exhaust temperature Tc is still below the predetermined temperature Ta as the engine 2 has just been started, the urea water cannot be injected from the urea-water injector 62. The HEV-ECU 20 therefore advances the procedure to Step S8 according to the determination of Step S7.

In Step S8, the HEV-ECU 20 selects a first operation mode and commands the engine ECU 22 to operate the engine 2 in the first operation mode. When the first operation mode is selected, the HEV-ECU 20 controls the inverter 6 so that the generator 4 produces a predetermined target electric power Wt, which is suitable for the battery 8 to be charged efficiently, at predetermined target revolution speed Nt. In response to the command of the HEV-ECU 20, the engine ECU 22 controls the engine 2 to operate the engine 2 in the first operation mode.

When the first operation mode is selected, the engine ECU 22 operates the engine 2 at the target revolution speed Nt, and, at the same time, controls the engine 2 to bring the engine 2 into an operation state that decreases NOx emissions from the engine body 30. More concretely, the engine ECU 22 controls the opening degree of the EGR valve 44 so that the EGR rate of the engine 2 is equal to a predetermined target EGR rate Re. The engine ECU 22 also delays fuel-injection timing in the injectors 40 of the engine 2 later than predetermined reference fuel-injection timing by predetermined delay amount Df.

The target EGR rate Re is set to fall in a range, for example, from 40 to 50 percent as a value that recirculates a large amount of exhaust gas of the engine 2 to the intake side, decreases combustion temperatures in combustion chambers of the engine body 30, and can markedly reduce the amount of NOx emissions from the engine body 30. As to the fuel-injection timing, the delay amount Df is so set as to reduce the amount of NOx emissions from the engine body 30 in combination with the massive EGR performed at the foregoing EGR rate. The reference fuel-injection timing is previously obtained and set as fuel-injection timing that enables a highly efficient operation of the engine 2.

The HEV-ECU 20 conducts the operation of the engine 2 in the first operation mode and the electric power generation of the generator 4 in Step S8 as described above. In subsequent Step S9, the HEV-ECU 20 commands the engine ECU 22 to suspend the urea water supply. Since the urea water supply from the urea-water injector 62 is not yet started at this point of time, the engine ECU 22 continues the suspension of the urea water supply according to the command of the HEV-ECU 20.

The HEV-ECU advances the procedure to Step S12, and the HEV-ECU 20 makes a determination as to whether the storage rate SOC of the battery 8, which is detected by the battery ECU 24, is equal to or higher than a predetermined upper limit storage rate SU. The upper limit storage rate SU is a judgment value for judging if the charging of the battery 8 is completed. If the HEV-ECU 20 determines in Step S12 that the storage rate SOC of the battery 8 is equal to or higher than the upper limit storage rate SU, this means the completion of charging of the battery 8. However, if the storage rate SOC of the battery 8 is lower than the upper limit storage rate SU, the HEV-ECU 20 ends the control procedure for the present control cycle, and restarts the procedure from Step S1 in the subsequent control cycle.

In the subsequent control cycle, because of the need for charging of the battery 8, the value of the flag F1 is "1", and the engine 2 is in operation. The HEV-ECU 20 therefore advances the procedure from Step S1 directly to Step S7. In Step S7, on the basis of the information transmitted from the engine ECU 22, the HEV-ECU 20 again determines whether the exhaust temperature Tc of the exhaust gas flowing into the SCR catalyst 58, which is detected by the exhaust temperature 66, is equal to or higher than the predetermined temperature Ta.

After the engine 2 is started, therefore, unless the exhaust temperature Tc increases up to the predetermined temperature Ta, the HEV-ECU 20 repeats the procedure of Step S1 and Steps S7, S8 and S9 in each control cycle. Consequently, the operation of the engine 2 in the first operation mode and the electric power generation of the generator 4 are conducted, and the urea water supply from the urea-water injector 62 continues to be suspended. It is then impossible to carry out the selective reduction of NOx using, as a reducing agent, the ammonia that is produced from the urea water supplied into exhaust gas. During this period, however, the engine 2 is operated in the first operation mode, and the amount of NOx emissions from the engine body 30 is accordingly small. This makes it possible to keep a small amount of NOx emitted from the exhaust aftertreatment device 46 into the atmosphere.

If the operation of the engine 2 is continued in this way, and the exhaust temperature Tc increases up to the predetermined temperature Ta, the HEV-ECU 20 advances the procedure to Step S10 according to the judgment made in Step S7.

In Step S10, the HEV-ECU 20 selects the second operation mode and commands the engine ECU 22 to operate the engine 2 in the second operation mode. When the second operation mode is selected, the HEV-ECU 20 controls the inverter 6 so that the generator 4 produces the predetermined target electric power Wt, which is suitable for the battery 8 to be charged efficiently, at the predetermined target revolution speed Nt in the similar way as in the case where the above-described first operation mode is selected. In response to the command of the HEV-ECU 20, the engine ECU 22 controls the engine 2 so that the engine 2 is operated in the second operation mode.

When the second operation mode is selected, the engine ECU 22 operates the engine 2 at the target revolution speed Nt. At this time, the engine ECU 22 controls the opening degree of the EGR valve 44 so that the EGR rate of the engine 2 is zero percent. The engine ECU 22 also sets the fuel-injection timing in the injectors 40 of the engine 2 to be the reference fuel-injection timing. Depending on the specification of the engine 2 or the like, the EGR rate in the second operation mode may be set to be about several percent, if desired. In any case, the EGR rate in the second operation mode is much lower than the target EGR rate Re that is applied in the first operation mode.

As described above, in the second operation mode, the EGR rate is drastically reduced as compared to in the first operation mode, by being set at zero percent (or several percent), and the fuel-injection timing is set to be the reference fuel-injection timing. As a result, combustion efficiencies in the combustion chambers of the engine body 30 are improved and therefore the engine 2 can be operated with high efficiency.

On the other hand, as a result of reduction of the EGR rate of the engine 2 and the setting back of the fuel-injection timing to the reference fuel-injection timing in the second operation mode, the amount of NOx emissions from the engine body 30 is increased as compared to in the first operation mode. However, since the exhaust temperature Tc is equal to or higher than the predetermined temperature Ta, which allows the urea water to be supplied from the urea-water injector 62, the HEV-ECU 20 advances the procedure to the subsequent Step 511, and commands the engine ECU 22 to conduct the urea water supply.

In response to the command of the HEV-ECU 20, the engine ECU 22 calculates the NOx emission amount of the engine 2 per unit time when the engine 2 is in operation in the second operation mode. The engine ECU 22 further obtains target urea-water supply rate M1 per unit time on the basis of ammonia supply amount that is required to selectively reduce the whole calculated amount of NOx emissions. According to the target supply rate M1 thus obtained, the engine ECU 22 controls the urea-water injector 62 to supply urea water.

The urea contained in the urea water injected from the urea-water injector 62 is hydrolyzed by exhaust heat as described above, thereby producing ammonia. The ammonia produced from the urea water flows into the SCR catalyst 58 and reduces the NOx in the exhaust gas as a reducing agent, thereby purifying the exhaust gas. Even if the amount of NOx emissions from the engine body 30 is increased as stated above by operating the engine 2 in the second operation mode, it is possible to maintain the small amount of NOx that is emitted from the exhaust aftertreatment device 46 into the atmosphere, due to the selective reduction caused by the SCR catalyst 58 using, as a reducing agent, the ammonia produced from the urea water.

After the HEV-ECU 20 selects the second operation mode in Step S10, and supplies the urea water in Step 511, the HEV-ECU 20 advances the procedure to Step S12. In Step S12, as described above, the HEV-ECU 20 makes a determination as to whether the storage rate SOC of the battery 8, which is detected by the battery ECU 24, is equal to or higher than the predetermined upper limit storage rate SU. If the storage rate SOC of the battery 8 is not equal to or higher than the upper limit storage rate SU, the HEV-ECU 20 ends the control procedure for the present control cycle, and restarts the procedure from Step S1 in the subsequent control cycle.

In the subsequent control cycle, because of the need for charging of the battery 8, the value of the flag F1 is already "1", and the engine 2 is in operation. The HEV-ECU 20 therefore advances the procedure from Step S1 directly to Step S7. In Step S7, on the basis of the information transmitted from the engine ECU 22, the HEV-ECU 20 again determines whether the exhaust temperature Tc of the exhaust gas flowing into the SCR catalyst 58, which is detected by the exhaust temperature 66, is equal to or higher than the predetermined temperature Ta.

The exhaust temperature Tc is already equal to or higher than the predetermined temperature Ta, so that the HEV-ECU 20 advances the procedure to Steps S10 and S11 according to the judgment made in Step S7. The HEV-ECU 20 carries out the operation of the engine 2 in the second operation mode and the electric power generation of the generator 4 in Step S11 in the above-described fashion, and advances the procedure to Step S12.

As long as the HEV-ECU 20 determines in Step S12 that the storage rate SOC of the battery 8 is not equal to or higher than the upper limit storage rate SU, the engine 2 is operated in the second operation mode, and electric power generation is carried out by the generator 4. By this means, the engine 2 is operated with high efficiency. At the same time, the NOx discharged from the engine body 30 is selectively reduced by the SCR catalyst 58 using, as a reducing agent, the ammonia produced from the urea water supplied from the urea-water injector 62, thereby purifying exhaust gas.

It is noted that, in the present embodiment, when the first operation mode is switched to the second according to the judgment made in Step S7, the engine ECU 22 does not immediately switch the EGR rate of the engine 2 to the target EGR rate corresponding to the second operation mode. To be concrete, if the HEV-ECU 20 determines in Step S7 that the exhaust temperature Tc is equal to or higher than the predetermined temperature Ta and commands the engine ECU 22 to apply the second operation mode, the engine ECU 22 receives the command and gradually changes the EGR rate of the engine 2 to the target EGR rate corresponding to the second operation mode over predetermined time. Likewise for the fuel-injection timing, if the HEV-ECU 20 determines in Step S7 that the exhaust temperature Tc is equal to or higher than the predetermined temperature Ta and commands the engine ECU 22 to apply the second operation mode, the engine ECU 22 receives the command and then gradually changes the fuel-injection timing to the reference fuel-injection timing over predetermined time. This prevents a sudden change in operation state of the engine 2, and the operation state of the engine 2 can be smoothly shifted from the first operation mode to the second.

If the generator 4 is driven by the engine 2 being operated in the second operation mode, and the battery 8 is charged with the target electric power Wt generated by the generator 4, the storage rate SOC of the battery 8 rises. If the HEV-ECU 20 determines in Step S12 that the storage rate SOC of the battery 8 is equal to or higher than the upper limit storage rate SU, this means that the charging of the battery 8 is completed. The HEV-ECU 20 therefore advances the procedure to Step S13 and resets the value of the flag F1 to "0".

In subsequent Step S3, the HEV-ECU 20 commands the engine ECU 22 to stop the engine 2, and controls the inverter 6 to discontinue the electric power generation of the generator 4. In response to the command of the HEV-ECU 20, the engine ECU 22 stops the engine 2 by discontinuing the fuel supply to the engine 2.

The HEV-ECU 20 further advances the procedure to Step S4. In Step S4, the HEV-ECU 20 commands the engine ECU 22 to suspend the urea water supply from the urea-water injector 62, and then ends the control procedure for the present control cycle. In response to the command of the HEV-ECU 20, the engine ECU 22 controls the urea-water injector 62 to suspend the urea water supply.

In the subsequent control cycle, the HEV-ECU 20 starts the procedure from Step S1 again. At this point of time, the value of the flag F1 is already reset to "0" since the charging of the battery 8 is completed. The HEV-ECU 20 therefore advances the procedure to Step S2. In Step S2, the HEV-ECU 20 makes a determination as to whether the storage rate SOC of the battery 8, which is detected by the battery ECU 24, is less than the predetermined lower limit storage rate SL. In other words, unless the storage rate SOC of the battery 8 falls below the lower limit storage rate SL again, the HEV-ECU 20 repeats the procedure from Steps S1 to S4 in each control cycle as mentioned above. As a consequence, the engine 2 is maintained in the stationary condition, and the generator 4 does not generate electric power. The urea water supply from the urea-water injector 62 is also kept suspended.

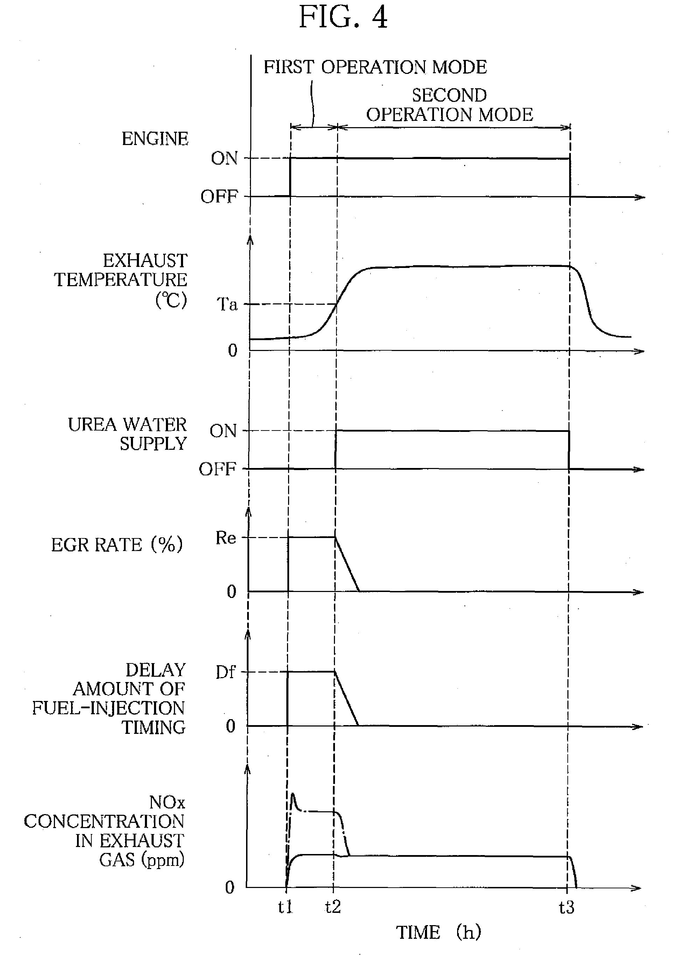

FIG. 4 shows temporal changes in the operation state of the engine 2, the temperature of the exhaust gas flowing into the SCR catalyst 58, the urea-water supply state, NOx concentration in exhaust gas emitted from the exhaust aftertreatment device 46, the EGR rate of the engine 2, and the delay amount of the fuel-injection timing, when the HEV-ECU 20 carries out the charging control as mentioned above. In FIG. 4, the delay amount of the fuel-injection timing is the amount of delay from the reference fuel-injection timing that is applied when the engine 2 is operated in the second operation mode.

When the storage rate SOC of the battery 8 falls below the lower limit storage rate SL at time t1 shown in FIG. 4, and the engine 2 is switched on, the engine 2 is operated at first in the first operation mode after the time t1.

When the first operation mode is selected, the engine ECU 22 controls the amount of fuel supply from the injectors 40 so that the engine revolution speed is the target revolution speed Nt. At this time, the fuel-injection timing is delayed from the reference fuel-injection timing by the delay amount Df. The engine ECU 22 controls the opening degree of the EGR valve 44 so that the EGR rate of the engine 2 becomes the target EGR rate Re, thereby recirculating a large amount of exhaust gas to the intake side through the EGR passage 42 in the engine 2.

Along with the foregoing process, the HEV-ECU 20 controls the inverter 6 so that the generator 4 produces the target electric power Wt at the predetermined target revolution speed Nt. As a result, the battery 8 starts to be charged with the electric power generated by the generator 4, and the storage rate SOC of the battery 8 is increased by degree.

Because the engine 2 is operated in the first operation mode, the exhaust temperature of the engine 2 is increased gradually. For a certain time after the start of the engine 2, however, the exhaust temperature Tc is lower than the predetermined temperature Ta that allows the urea water supply from the urea-water injector 62. The urea water supply from the urea-water injector 62 is therefore not conducted. For this reason, even if the SCR catalyst 58 is activated by the increase of the exhaust temperature, exhaust gas cannot be purified by selective reduction of NOx using, as a reducing agent, the ammonia produced from urea water.

After being started, however, the engine 2 is operated in the first operation mode as mentioned above. More specifically, since a large amount of exhaust gas is recirculated to the intake side by controlling the EGR rate of the engine 2 to be the target EGR rate Re, and the fuel-injection timing is delayed from the reference fuel-injection timing by the delay amount Df, NOx emissions from the engine body 30 are drastically decreased. Without the massive exhaust gas recirculation and the delay of the fuel-injection timing, a great deal of NOx discharged from the engine body 30 is directly emitted from the exhaust aftertreatment device 46 as shown by a dashed line in FIG. 4. In result, the exhaust gas emitted from the exhaust aftertreatment device 46 has high NOx concentration. By contrast, in the present embodiment, the engine 2 is operated in the first operation mode, and thus decreases the NOx emissions from the engine body 30. As shown by a solid line in FIG. 4, therefore, it is possible to maintain a low NOx concentration in the exhaust gas emitted from the exhaust aftertreatment device 46.

When the exhaust temperature Tc of the engine 2 is increased to reach the predetermined temperature Ta at time t2 as the result of continuous operation of the engine 2 in the first operation mode, the urea water is allowed to be supplied from the urea-water injector 62. The urea water supply from the urea-water injector 62 is then started at the target supply rate M1. The ammonia produced from the urea water is supplied to the SCR catalyst 58 as a reducing agent, and the NOx contained in the exhaust gas discharged from the engine body 30 is selectively reduced, thereby purifying the exhaust gas.

Along with the foregoing process, the operation of the engine 2 is switched from the first operation mode to the second. When the second operation mode is selected, the engine 2 is controlled so that the engine revolution speed becomes the target revolution speed Nt as in the first operation mode, and also the inverter 6 is controlled so that the generator 4 generates the target electric power Wt at the target revolution speed Nt. In addition, when the second operation mode is selected, the EGR rate of the engine 2 is changed from the target EGR rate Re to "0" percent (or several percent), and the fuel-injection timing that has been delayed from the reference fuel-injection timing by the delay amount Df is changed to the reference fuel-injection timing. It is noted that, when the EGR rate and the fuel-injection timing are changed in response to the switching from the first operation mode to the second, the engine ECU 22 gradually approximates the EGR rate and the fuel-injection timing to values corresponding to the second operation mode as shown in FIG. 4. As a result, the operation of the engine 2 is smoothly switched from the first operation mode to the second operation mode.

When the engine 2 is operated in the second operation mode, the amount of NOx emissions from the engine body 30 is increased as compared to in the first operation mode.
However, since the urea water supply from the urea-water injector 62 is already started in response to the shifting to the second operation mode, the NOx discharged from the engine body 30 is selectively reduced in the SCR catalyst 58 by using, as a reducing agent, the ammonia produced from the urea water. It is then possible as shown in FIG. 4 to maintain the low NOx concentration in the exhaust gas emitted from the exhaust aftertreatment device 46.

If the battery 8 is charged with the generated electric power of the generator 4 driven by the engine 2 operated in the second operation mode, the storage rate SOC of the battery 8 reaches the upper limit storage rate SU of the battery 8 at time t3. At this point of time, the charging of the battery 8 is completed, so that the engine 2 is stopped, and the urea water supply from the urea-water injector 62 is suspended.

When the engine 2 is operated in the necessity of charging the battery 8, if the urea water cannot be supplied from the urea-water injector 62 because of low exhaust temperature of the engine 2, the engine 2 is operated in the first operation mode. In addition, the EGR rate of the engine 2 is set at the target EGR rate Re, and the fuel-injection timing is delayed from the reference fuel-injection timing by the delay amount Df. Therefore, NOx emissions from the engine body 30 are decreased. Consequently, even if it is difficult to selectively reduce NOx in the SCR catalyst 58 by using, as a reducing agent, the ammonia produced from the urea water, the amount of NOx emitted from the exhaust aftertreatment device 46 can be reduced without fail.

When the exhaust temperature of the engine 2 is increased, and the urea water is allowed to be supplied from the urea-water injector 62, the engine 2 is operated in the second operation mode. In addition, the EGR rate of the engine 2 is set to zero percent (or several percent) that is lower than the target EGR rate Re, and the fuel-injection timing is set at the reference fuel-injection timing instead of being delayed. This makes it possible to operate the engine 2 with high efficiency to secure good fuel-consumption performance. The urea water is supplied from the urea-water injector 62, and NOx is selectively reduced in the SCR catalyst 58 by using, as a reducing agent, the ammonia produced from the urea water. As a consequence, even if the NOx emission amount of the engine body 30 is increased after the engine 2 is shifted to the second operation mode, it is possible to maintain the small amount of NOx in the exhaust gas emitted from the exhaust aftertreatment device 46.

This is the end of the description of the exhaust purification system for a hybrid electric vehicle according to one embodiment of the present invention, but the invention is not limited to the above-described embodiment.

For example, in the embodiment, when the engine 2 is operated in the first operation mode, the massive exhaust gas recirculation is carried out at the target EGR rate Re, and the fuel-injection timing is delayed from the reference fuel-injection timing by the delay amount Df. By this means, NOx emissions from the engine body 30 is decreased in the embodiment. However, a method for decreasing NOx emissions is not limited to this. For example, the EGR rate may be set at the target EGR rate Re without delaying the fuel-injection timing. Yet another method for decreasing NOx emissions may be to leave the EGR rate at zero percent (or several percent) as in the second operation mode and delay the fuel-injection timing from the reference fuel-injection timing by the delay amount Df. It is also possible to change the operation state of the engine 2 to decrease NOx emissions, not by changing the EGR rate or the fuel-injection timing but by taking another method.

In the embodiment, the target EGR rate Re and the delay amount Df in the first operation mode are constant values. However, the target EGR rate Re and the delay amount Df may be variable depending upon the operation state of the engine 2, ambient environment, etc. The same applies to the EGR rate and the fuel-injection timing in the second operation mode.

In the embodiment, when the EGR rate and the fuel-injection timing are changed in response to the switching from the first operation mode to the second, they are so changed as to gradually approach the values corresponding to the second operation mode. However, the EGR rate and the fuel-injection timing may be switched at once to the values corresponding to the second operation mode.

Although the determination as to whether the urea water supply is allowed is solely made by the temperature of the exhaust gas flowing into the SCR catalyst 58 in the embodiment, the exhaust temperature is not the only condition that determines if the urea water supply is allowed. Conditions for determination may include, for example, whether the urea-water injector 62 has a trouble, urea-water storage amount in the urea-water tank 64, operation states of the engine 2, etc. Furthermore, a position for measuring the exhaust temperature is not limited to the position mentioned in the embodiment. For example, instead of exhaust temperature, the catalyst temperature of the SCR catalyst 58 may be used. Also, the exhaust temperature may be estimated on the basis of the operation state of the engine 2.

In the embodiment, the exhaust aftertreatment device 46 has not only the SCR catalyst 58 but also the filter 56. In addition, the pre-stage oxidation catalyst 54 is placed in the upstream side of the filter 56, and the post-stage oxidation catalyst 60 in the downstream side of the SCR catalyst 58. However, the configuration and installation position of the exhaust aftertreatment device other than the SCR catalyst 58 are not limited to the foregoing. It is possible to eliminate a part of the exhaust aftertreatment device, if desired, and to combine the exhaust aftertreatment device with another exhaust purification device.

Although, in the embodiment, the engine 2 is a 4-cylinder diesel engine, the engine 2 is not limited in the number of cylinders and type. In fact, the invention is applicable to any series-type hybrid electric vehicle as in the embodiment as long as the vehicle is equipped with an engine having the SCR catalyst 58 that selectively reduces NOx in exhaust gas by using ammonia as a reducing agent.

## Claims

1. An exhaust purification system for a hybrid electric vehicle, in which a generator is driven by power from an engine that is not used for moving the vehicle, electric power produced by the generator is stored in a battery, and an electric motor that is driven by the electric power supplied from the battery is used as a power source for moving the vehicle, comprising:
an ammonia selective reduction-type NOx catalyst interposed in an exhaust passage of the engine, for selectively reducing NOx contained in exhaust gas by using ammonia as a reducing agent;
a urea water supply unit for supplying urea water into the exhaust gas existing upstream of the ammonia selective reduction-type NOx catalyst; and
a control unit for starting or stopping the engine according to a storage state of the battery, and controlling the urea water supply unit to start the urea water supply when a preset supply condition is met after the engine is started, the control unit operating the engine in a first operation mode before the start of the urea water supply from the urea water supply unit, and operating the engine in a second operation mode after the start of the urea water supply from the urea water supply unit, wherein
the control unit changes an operation state of the engine between the first operation mode and the second operation mode so that NOx emissions from the engine are more decreased in the first operation mode than in the second operation mode.

2. The exhaust purification system for a hybrid electric vehicle according to claim 1, wherein the control unit changes the operation state of the engine between the first and second operation modes by making an EGR rate of the engine in the first operation mode higher than an EGR rate of the engine in the second operation mode.

3. The exhaust purification system for a hybrid electric vehicle according to claim 2, wherein the control unit changes the operation state of the engine between the first and second operation modes not only by changing the EGR rate of the engine but also by delaying fuel-injection timing of the engine in the first operation mode later than fuel-injection timing of the engine in the second operation mode.

4. The exhaust purification system for a hybrid electric vehicle according to claim 1, wherein the control unit changes the operation state of the engine between the first and second operation modes by delaying the fuel-injection timing of the engine in the first operation mode later than the fuel-injection timing of the engine in the second operation mode.
